Europäisches Patentamt

European Patent Office

Office européen des brevets

(19)

(11) Numéro de publication : **0 441 680 A1**

## (12) DEMANDE DE BREVET EUROPEEN

(21) Numéro de dépôt : **91400217.5**

(51) Int. Cl.⁵ : **A23L 1/318**

(22) Date de dépôt : **30.01.91**

(30) Priorité : **31.01.90 FR 9001128**

(43) Date de publication de la demande :
**14.08.91 Bulletin 91/33**

(84) Etats contractants désignés :
**AT BE CH DE DK ES FR GB GR IT LI LU NL SE**

(71) Demandeur : **SOCIETE OLIDA S.A.**
**10 rue Victor-Noir**
**F-92201 Neuilly sur Seine Cédex (FR)**

(72) Inventeur : **Dabin, Eugène**
**35 Hameau du Prieuré**
**F-69230 St Genis Laval (FR)**

(74) Mandataire : **Warcoin, Jacques et al**
**Cabinet Régimbeau 26, avenue Kléber**
**F-75116 Paris (FR)**

(54) Salaisons contenant du bifidus.

(57) La présente invention concerne une nouvelle salaison à base de pâte de viande fermentée, caractérisée en ce qu'elle contient des Bifidobacterium vivants, ainsi que son procédé de préparation.

EP 0 441 680 A1

## SALAISONS CONTENANT DU BIFIDUS

La présente invention concerne l'utilisation de Bifidus dans la préparation de salaisons, en particulier de salaisons de type saucisson sec.

Dans le domaine de la charcuterie, la présence, dans les produits, de germes est toujours assimilée à l'obtention d'un produit impropre à la consommation.

Il existe, toutefois, des produits de charcuterie qui vont à l'encontre de cette considération générale, il s'agit des saucissons secs et des salaisons apparentées.

En effet, les saucissons secs qui sont constitués d'une pâte de viande crue sont maintenus à l'abri des germes nocifs grâce à une fermentation. Pour ce faire, on ajoute à la pâte du lactose ou un autre sucre fermentescible qui doit servir de support à une fermentation lactique, laquelle permettra, en abaissant le pH de la pâte, d'éviter précisément les contaminations microbiologiques.

Les saucissons sont classiquement fermentés avec des germes des groupes Lactobacillus et Micrococcus, plus rarement Pseudococcus et levures.

La présente invention repose sur la mise en évidence de l'intérêt diététique de la mise au point d'une salaison contenant des souches de Bifidobacterium vivant et présentant de façon générale une teneur en gras inférieure aux salaisons traditionnelles.

L'utilisation du Bifidus ou Bifidobacterium est largement répandue dans la préparation des laits fermentés et l'intérêt de ces microorganismes a été largement démontré sur le plan diététique.

Parmi les effets qui ont été mis en avant pour démontrer l'intérêt du Bifidus, il faut citer notamment:
- l'action sur l'équilibre de la flore intestinale,
- l'apport de lactase bactérienne,
- un effet sur le taux de cholestérol sanguin, et
- d'autres effets positifs, notamment au niveau des systèmes immunitaires.

Bien que certains de ces effets soient controversés, il semble que l'action positive générale communément admise soit plus particulièrement intéressante lorsque le microorganisme est vivant.

Dans l'utilisation des laits fermentés d'ailleurs, le caractère "vivant", actif des germes est souvent mis en évidence. Bien que la durée de survie puisse être différente suivant les types d'analyses qui sont réalisés, il semble que l'on s'accorde sur des durées de vie pouvant aller de 7 jours à 3 semaines.

Les problèmes posés lors de la réalisation d'une nouvelle salaison contenant des Bifidobacterium sont que, à la différence du lait qui constitue un milieu favorable au développement des bactéries, certains des éléments de la pâte de viande, notamment la présence de sel et de nitrate, ne sont pas forcément favorable à la croissance des Bifidobacterium. De même, le fait que le saucisson soit séché et subisse différentes contraintes mécaniques, notamment le poussage et le pétrissage, ne sont pas forcément des conditions idéales de développement des Bifidobacterium.

Or, on a pu mettre en évidence que certains types de salaisons permettaient d'obtenir des produits dans lesquels les Bifidobacterium restaient vivants pendant un temps très important, et notamment pendant toute la période s'écoulant jusqu'à la date dite "date limite de consommation".

C'est pourquoi, la présente invention concerne de nouvelles salaisons à base de pâte de viande fermentée, caractérisées en ce qu'elles contiennent des Bifidobacterium vivants.

Afin que les Bifidobacterium puissent rester vivants dans ladite salaison, il convient de prévoir, de préférence, une salaison contenant moins de 20 % en poids de gras. En effet, une teneur réduite en gras augmente la teneur en viande, c'est-à-dire la teneur en eau du produit, ce qui a un effet positif sur la survie des Bifidus.

De façon préférentielle, on prévoira des teneurs en gras comprises entre 12 et 16 %, les pourcentages sont donnés sur le produit avant séchage.

Le Bifidobacterium étant une bactérie anaérobie, il convient de prévoir que la salaison soit conditionnée dans un emballage où l'atmosphère ne contient pas d'oxygène. Ce type d'emballage est déjà connu et utilisé.

Les salaisons selon la présente invention se présenteront de préférence comme des produits de type "salaison diététique", pauvres en graisse et contenant des souches de Bifidobacterium vivantes. Afin de simplifier l'explication on appellera ces salaisons "saucissons", car la technologie qui sera mise en oeuvre est très similaire à celle qui est mise en oeuvre pour la préparation des saucissons.

Bien que l'on puisse envisager de réaliser la fermentation lactique des pâtes de viande, en particulier des pâtes de viandre crue, uniquement avec des Bifidobacterium, il est possible de prévoir l'ajout de bactéries plus traditionnelles telles qu'elles ont déjà été mentionnées, par exemple les Lactobacillus.

Afin d'obtenir ces salaisons, la présente invention concerne également un procédé de préparation comportant les étapes suivantes :
- on prépare une pâte de viande,
- on ajoute des Bifidobacterium à la pâte de viande, avant le pétrissage et sous forme d'une solution contenant les bactéries vivantes,
- on pousse la pâte dans les boyaux, et
- on sèche les salaisons ainsi obtenues.

A la différence de ce qui est actuellement réalisé lorsque l'on ajoute des ferments lactiques à la pâte afin de réaliser la fermentation, les Bifidobacterium doivent être ajoutés sous forme vivante et sous forme d'une solution afin d'assurer un bon mélange des Bifidobacterium.

Les ferments habituellement employés tels que Lactobacillus ou Micrococci sont la plupart du temps ajoutés lors de la préparation de la pâte, notamment avec les épices, sous forme lyophilisée et non pas sous forme revivifiée.

Egalement, à la différence des ferments habituellement employés dans les salaisons, les Bifidobacterium seront de préférence conservés à basse température avant d'être ajoutés et non pas conservés sous forme lyophilisée.

Enfin, dans la technologie de mise en oeuvre, il convient de prévoir que le pétrissage et le poussage seront effectués sous vide, ceci afin de maintenir les bactéries en anaérobiose.

Dans cette descrption, on utilise la terminologie "Bifidobacterium ou Bifidus", il s'agit en fait d'un germe qui comporte différentes espèces dont la plus utilisée est B. bifidum, mais d'autres espèces sont utilisables.

D'autres caractéristiques et avantages de la présente invention apparaîtront à la lecture de l'exemple ci-après.

## Exemple

Le Bifidobacterium bifidum utilisé dans la mise en oeuvre du procédé selon le présent exemple est commercialisé par la société BOLL à Arpajon sous la dénomination BVS Bifidobacterium bifidum, n° de culture Bb 12. Il s'agit d'une souche qui est utilisée pour la fabrication de produits laitiers nouveaux et en particulier de laits fermentés.

L'essai rapporté ci-après est réalisé de la façon suivante :

On prépare 250 kg d'une pâte de viande crue de type dit "Cocagne" à laquelle on ajoute des ferments habituels, à savoir $10^6$/g de Lactobacillus et $10^6$/g de Micrococci.

On prépare à partir de la souche Bifidobacterium bifidus mentionnée précédemment, congelée à -50°C, une solution de décongélation obtenue par mise en présence d'environ 250 g de ferments dans du lait à +40°C, la solution lactique ainsi obtenue est versée lentement dans le pétrin contenant les 250 kg de viande, le mélange étant effectué sous vide.

Lorsque le mélange est homogène, on le pousse dans un boyau artificiel, l'opération étant réalisée sous vide.

Les saucissons ainsi obtenus sont séchés entre 15 et 18 jours dans des conditions normales et conditionnés dans des emballages sous atmosphère contrôlée ne contenant pas d'oxygène.

Dans ces conditions, à la fin du séchage on dénombre des Bifidobacterium vivants en grand nombre et dans les premières estimations le nombre des Bifidobactéries s'est maintenu dans le saucisson.

La survie des Bifidobacterium se poursuit jusqu'à la date limite de consommation.

## Revendications

1. Salaison à base de pâte de viande fermentée, caractérisée en ce qu'elle contient des Bifidobacterium vivants.

2. Salaison selon la revendication 1, caractérisée en ce que ladite salaison contient moins de 20 % en poids de gras.

3. Salaison selon la revendication 2, caractérisée en ce que ladite salaison contient entre 12 et 16 % en poids de gras.

4. Salaison selon l'une des revendications 1 à 3, caractérisée en ce que ladite salaison est conditionnée dans un emballage sous atmosphère ne contenant pas d'oxygène.

5. Salaison selon l'une des revendications 1 à 4, caractérisée en ce que ladite salaison est de type saucisson sec.

6. Salaison selon l'une des revendications 1 à 5, caractérisée en ce que ladite salaison contient, en outre, des Lactobacillus et/ou des Micrococci assurant l'acidification du milieu lors de la fermentation.

7. Salaison selon l'une des revendications 1 à 4, caractérisée en ce que le Bifidobacterium est du genre B. bifidum.

8. Procédé de préparation d'une salaison selon l'une des revendications 1 à 7, caractérisé en ce que :
   - on prépare une pâte de viande,
   - on ajoute des Bifidobacterium à la pâte de viande, avant le pétrissage et sous forme d'une solution contenant les bactéries vivantes,
   - on pousse la pâte dans les boyaux, et
   - on sèche les salaisons ainsi obtenues.

9. Procédé selon la revendication 8, caractérisé en ce que les Bifidobacterium sont conservés à basse température avant d'être revivifiés pour être mis sous forme de solution.

10. Procédé selon l'une des revendications 8 et 9, caractérisé en ce que le pétrissage et le poussage sont effectués sous vide.

EP 0 441 680 A1

Office européen
des brevets

**RAPPORT DE RECHERCHE EUROPEENNE**

Numéro de la demande

EP 91 40 0217

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN vol. 12, no 213 (C-505)(3060), 17 juin 1988; & JP-A-6314656 (MEIJI MILK PROD. CO. LTD.) 21.01.1988 --- | 1 | A 23 L 1/318 |
| Y | JOURNAL OF FOOD SCIENCE vol.50, no. 2, mars/avril 1985, pages 316-320, Chicago, Illinois, US; J.A.MARCY et al.: "Fate of Staphylococcus aureus in Reduced Sodium Fermented Sausage" --- | 1 | |
| A | DE-A-3 500 914 (K.MUELLER) * page 5, exemple 1; revendications 1-7 * --- | 1 | |
| A | EP-A-0 321 692 (KARL MUELLER & CO. KG) * abrégé; reevendications 1,2 * ----- | 1 | |

**DOMAINES TECHNIQUES RECHERCHES (Int. Cl.5)**

A 23 L 1/00
A 23 B 4/00
A 22 C 11/00

Le présent rapport a été établi pour toutes les revendications

| Lieu de la recherche | Date d'achèvement de la recherche | Examinateur |
|---|---|---|
| BERLIN | 29-05-1991 | SCHULTZE D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

4